Europäisches Patentamt

European Patent Office

Office européen des brevets

(19)

(11) Numéro de publication : **0 076 201**
**B1**

(12)                    FASCICULE DE BREVET EUROPÉEN

(45) Date de publication du fascicule du brevet :
09.07.86

(51) Int. Cl.⁴ : **G 21 C   3/04**

(21) Numéro de dépôt : **82401706.5**

(22) Date de dépôt : **21.09.82**

(54) Aiguille combustible ou fertile pour réacteur nucléaire et son procédé de réalisation.

(30) Priorité : 30.09.81 FR 8118414

(43) Date de publication de la demande :
06.04.83 Bulletin 83/14

(45) Mention de la délivrance du brevet :
09.07.86 Bulletin 86/28

(84) Etats contractants désignés :
BE DE GB IT

(56) Documents cités :
DE-A- 1 947 202
FR-A- 1 565 786
FR-A- 2 045 788
FR-A- 2 100 548
GB-A- 2 019 076
US-A- 3 125 493

(73) Titulaire : **COMMISSARIAT A L'ENERGIE ATOMIQUE**
**Etablissement de Caractère Scientifique Technique**
**et Industriel**
**31/33, rue de la Fédération**
**F-75015 Paris (FR)**

(72) Inventeur : **Loriot, Pierre**
**Quartier Font Trompette**
**F-13770 Venelles (FR)**
Inventeur : **Rendu, Michel**
**La Grande Terrasse Impasse St. Eutrope**
**F-13100 Aix en Provence (FR)**
Inventeur : **Rousseau, Jean**
**Villa La Figuière 13 avenue St. Flenryval**
**F-13100 Aix en Provence (FR)**
Inventeur : **Samoel, Alain**
**18, rue des Muriers**
**F-04100 Manosque (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

**Description**

L'invention a pour objet une aiguille combustible ou fertile de réacteur nucléaire. Elle a également pour objet un procédé de fabrication de ces aiguilles.

Les aiguilles combustibles de réacteurs nucléaires à neutrons rapides sont généralement constituées par une gaine métallique à l'intérieur de laquelle on trouve des pastilles fissiles et fertiles, tandis que les aiguilles combustibles fertiles sont constituées par une gaine à l'intérieur de laquelle on trouve uniquement une colonne de pastilles fertiles.

L'invention concerne une aiguille combustible ou une aiguille fertile de réacteur nucléaire comportant une gaine, une colonne de pastilles fissiles et/ou fertiles située à l'intérieur de la gaine et maintenue par deux entretoises tubulaires placées en butée contre les deux extrémités de la colonne combustible, et deux bouchons d'extrémité soudés à chacune des deux extrémités de la gaine.

On connaît déjà (FR-A-1 565 786) une aiguille combustible de ce type. Elle comporte une gaine métallique allongée renfermant des pastilles d'un combustible fissile et d'un combustible fertile. Un élément d'écartement sépare les pastilles fissiles des pastilles fertiles inférieures. Cet élément comporte une gorge préformée, c'est-à-dire usinée. Lorsqu'on introduit cet élément d'écartement ou entretoise dans la gaine et qu'on le place en butée contre les pastilles fertiles, la déformation de la gaine par sertissage doit être effectuée en regard de la gorge prévue dans l'élément d'écartement.

Cependant, la longueur de la colonne de pastilles fissiles et celle de la colonne de pastilles fertiles varient. En effet, les dimensions d'une pastille sont sujettes à des tolérances de fabrication. La longueur d'une colonne de pastilles superposées est par suite elle aussi sujette à des tolérances de fabrication. Lorsqu'on introduit l'entretoise dans la gaine et qu'on la place en butée contre les pastilles annulaires, sa position varie en fonction de la hauteur effective de la colonne de pastilles. Une opération supplémentaire est donc nécessaire pour détecter la position de la gorge de l'entretoise. Il faut ensuite modifier la position de la gorge d'une aiguille à l'autre, c'est-à-dire régler la machine pour chaque aiguille en fonction de la position de la gorge.

L'invention a pour objet une aiguille de réacteur nucléaire qui remédie à cet inconvénient. Elle est caractérisée en ce que les deux entretoises présentent des parois de faible épaisseur déformables et en ce que ces entretoises sont liées à la gaine par une opération de sertissage réalisée simultanément sur la gaine et sur chaque entretoise à une cote fixe de la gaine, la longueur de chaque entretoise étant suffisante pour qu'il soit toujours possible de la sertir avec la gaine à cette cote fixe par rapport à la gaine, compte tenu des variations de longueur de la colonne fissile et/ou fertile provenant des tolérances de fabrication des pastilles.

Ainsi, l'entretoise de l'invention présente une longueur suffisante pour pouvoir être sertie à une cote fixe par rapport à la gaine quelle que soit la longueur réelle de la colonne de pastilles à l'intérieur des limites fixées par les tolérances de fabrication. En d'autres termes, la longueur de l'entretoise est au moins égale à la différence entre la hauteur maximale et la hauteur minimale de la longueur de la colonne de pastilles augmentée naturellement d'une quantité correspondant à la largeur nécessaire pour réaliser un sertissage. Avec l'invention, dans une fabrication de série, la machine est réglée une fois pour toutes, quelle que soit la longueur réelle de la colonne de pastilles. Il n'est pas nécessaire de détecter la position de l'entretoise par rapport à la gaine et il n'est pas non plus nécessaire de régler la machine pour chaque aiguille. Il en résulte donc une simplication et un gain de temps évidents.

Ces aiguilles supportent sans risque de rupture les contraintes dues aux différentes dilatations. Toutefois, selon une variante de réalisation, on peut limiter l'effort de traction transmis à la gaine au moyen d'entretoises comportant des échancrures longitudinales destinées à permettre la déformation des extrémités de ces entretoises sous l'effet de la dilatation de la colonne de pastilles lors de la montée en puissance du réacteur nucléaire.

L'invention concerne également un procédé de fabrication d'une aiguille combustible de réacteur nucléaire, ladite aiguille comportant une gaine, une colonne de pastilles fissiles et fertiles située à l'intérieur de la gaine et maintenue par deux entretoises tubulaires placées en butée contre les deux extrémités de la colonne combustible et deux bouchons d'extrémités soudés aux deux extrémités de la gaine.

Ce procédé se caractérise en ce que :
— on effectue un sertissage léger de la gaine à la cote fixe C ;
— on introduit des pastilles fertiles par l'extrémité inférieure de la gaine ;
— on introduit une entretoise inférieure présentant des parois de faible épaisseur, déformables, et une longueur suffisante pour qu'il soit toujours possible de la sertir avec la gaine à une cote fixe A par rapport à la gaine compte tenu des variations de longueur de la colonne fertile provenant des tolérances de fabrication des pastilles, au contact de la colonne fertile ;
— on sertit la gaine avec l'entretoise à la cote fixe en une seule opération réalisée simultanément sur la gaine et sur l'entretoise ;
— on introduit le bouchon inférieur ;
— on soude le bouchon inférieur ;
— on contrôle la soudure ;
l'ensemble des opérations qui précèdent étant effectuées hors zone contrôlée, et en ce que :

— on introduit la colonne fissile ;

— on introduit les pastilles fertiles supérieures ;

— on introduit l'entretoise supérieure au contact de la colonne fertile ; et

— on sertit la gaine avec l'entretoise à la cote fixe B ;

— on pose le bouchon supérieur ;

— on soude le bouchon supérieur ;

— on contrôle la soudure ;

l'ensemble des opérations de cette deuxième phase étant effectuées en zone contrôlée.

Selon une variante de réalisation de ce procédé appliquée à une aiguille fertile,

— on introduit une entretoise présentant des parois de faible épaisseur déformables et une longueur suffisante pour qu'il soit toujours possible de la sertir avec la gaine à une cote fixe A ou B par rapport à la gaine, compte tenu des variations de longueur de la colonne fertile provenant des tolérances de fabrication des pastilles ;

— on sertit cette entretoise avec la gaine à la cote fixe A ou B, en une seule opération réalisée simultanément sur la gaine et sur l'entretoise ;

— on introduit le premier bouchon du côté de l'entretoise sertie ;

— on soude le premier bouchon et on contrôle la soudure de ce bouchon ;

— on introduit les pastilles fertiles ;

— on introduit la deuxième entretoise ;

— on sertit cette entretoise à une cote fixe B ou A avec la gaine en une seule opération réalisée simultanément sur la gaine et sur l'entretoise ;

l'ensemble des opérations qui précèdent étant effectuées sous hotte ventilée et sous air frais, et en ce que :

— on pose le deuxième bouchon ;

— on soude le deuxième bouchon ;

— on contrôle la soudure de ce deuxième bouchon ; l'ensemble de ces opérations étant effectuées en enceinte à atmosphère contrôlée.

D'autres caractéristiques et avantages de l'invention apparaîtront encore à la lecture de la description qui suit d'un exemple de réalisation donné à titre indicatif et nullement limitatif, en référence aux dessins annexés, sur lesquels :

la figure 1 représente une vue d'ensemble en deux parties d'une aiguille combustible de réacteur nucléaire conforme à l'invention,

la figure 2 représente une vue d'ensemble en deux parties d'une aiguille fertile de réacteur nucléaire conforme à l'invention,

la figure 3 représente un premier mode de réalisation d'une entretoise utilisée pour bloquer la colonne de pastilles dans une aiguille de l'invention,

la figure 4 représente un deuxième mode de réalisation d'une entretoise déformable utilisée dans une aiguille de l'invention.

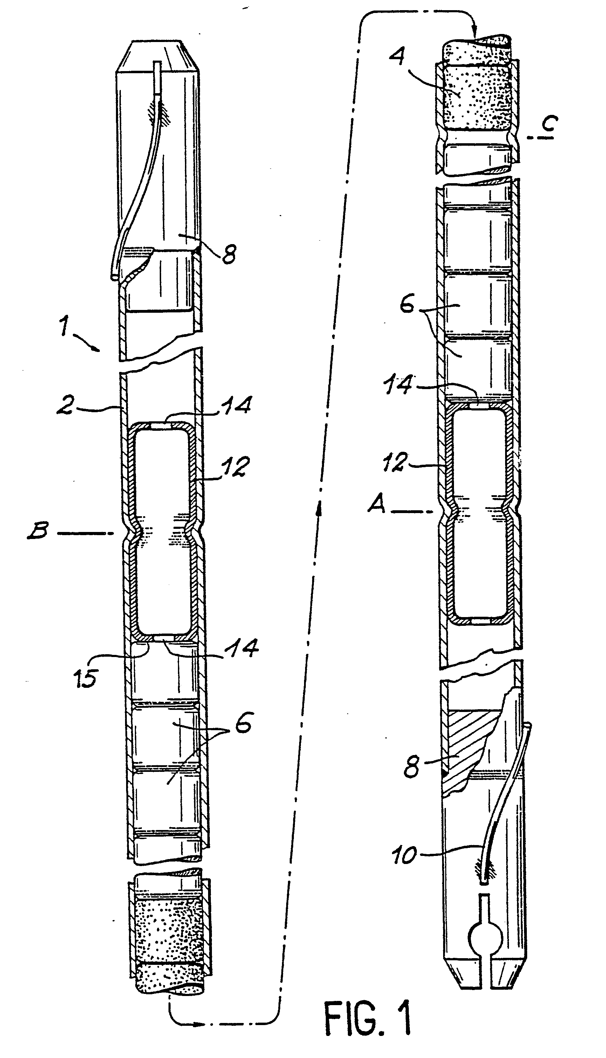

L'aiguille combustible représentée sur la figure 1, désignée par la référence générale 1, est constituée par une gaine métallique 2 à paroi mince dont la longueur est très grande par rapport à son diamètre. A l'intérieur de la gaine 2 sont empilées des pastilles de combustible fissile 4 et fertile 6. A ses deux extrémités, la gaine est fermée par un bouchon 8 soudé à la gaine. Un fil 10 enroulé en spirale autour de la gaine 2 assure l'espacement des aiguilles combustibles d'un même assemblage.

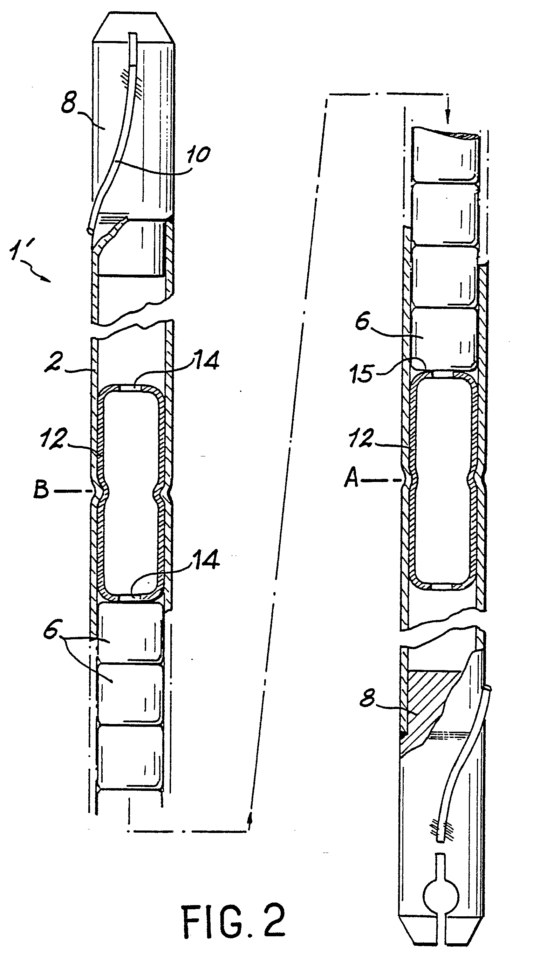

L'aiguille 1′ représentée sur la figure 2 est une aiguille fertile. Comme l'aiguille combustible de la figure 1, elle est constituée par une gaine métallique 2 à paroi mince. Toutefois, contrairement à cette dernière, elle ne contient que des pastilles fertiles 6. A ses deux extrémités, elle est fermée par un bouchon 8 soudé à la gaine 2.

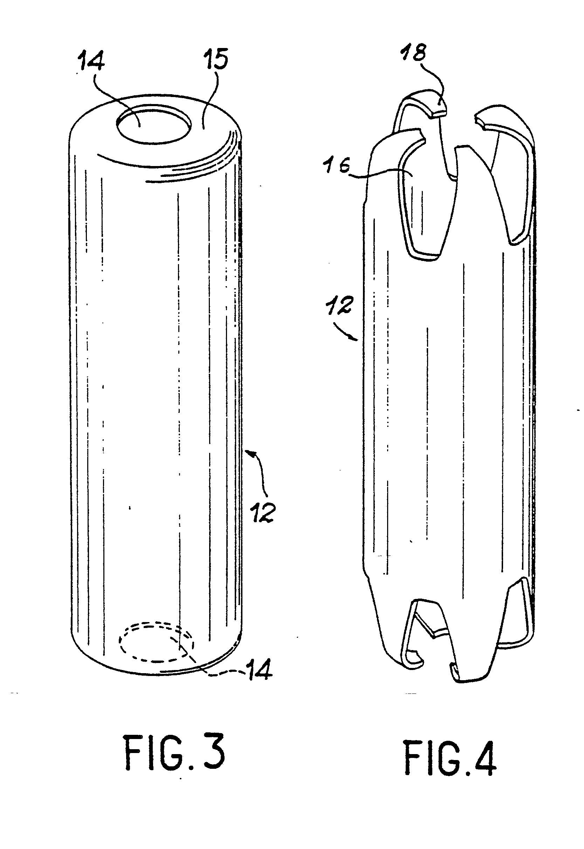

Conformément à l'invention, le maintien des pastilles est assuré aux deux extrémités par des entretoises tubulaires 12 et par un sertissage supplémentaire de positionnement de la colonne fertile, pour l'aiguille combustible. Les entretoises 12 sont arrondies à leurs extrémités ainsi que représenté sur la figure 3 afin de constituer une surface plane d'appui pour les pastilles. Les trous 14 qui subsistent sur les surfaces 15 permettent le passage des gaz dégagés par la réaction de fission qui se produit pendant le fonctionnement du réacteur nucléaire. Les entretoises 12 sont placées en butée respectivement au-dessus et au-dessous de la colonne de pastilles et elles sont serties avec la gaine 2. Ce sertissage est réalisé de l'extérieur par exemple par déformation isostatique ou mécanique (moletage). Ainsi, les entretoises 12 sont bloquées en translation par rapport à la gaine. On assure de cette manière le maintien de la colonne de pastilles fissiles et/ou fertiles.

Etant donné les jeux de montage des pastilles, l'aiguille combustible ou fertile réalisée conformément à l'invention supporte sans risques de rupture les contraintes dues aux dilatations différentielles se produisant notamment lors de la première montée en puissance du réacteur nucléaire. En régime permanent, ces aiguilles ont un comportement identique à celui des aiguilles de l'art antérieur dans lesquelles le maintien de la colonne est assuré par un dispositif à ressort.

Toutefois, en conditions accidentelles, il est possible de limiter éventuellement le risque de mise en traction de la gaine au moyen d'entretoises 12 telles que celle représentée sur la figure 4. Cette entretoise, représentée en perspective, comporte un certain nombre d'échancrures 16, pratiquées longitudinalement aux deux extrémités dans la paroi du tube. Ces échancrures laissent en relief des languettes 18 qui sont déformables sous l'effet de la poussée résultant de la dilatation de la colonne de pastilles. La déformation des languettes 18 limite l'effort transmis à la gaine.

L'invention a également pour objet un procédé de fabrication des aiguilles combustibles ou fertiles qui viennent d'être décrites. Ce procédé comporte deux variantes selon le type d'aiguille. On sait en effet que le cœur d'un réacteur nucléaire à neutrons rapides est constitué essentiellement d'assemblages combustibles et fertiles contenant respectivement un faisceau d'aiguilles combustibles et un faisceau d'aiguilles fertiles. Les aiguilles combustibles comportent dans leur partie centrale une colonne de pastilles fissiles et, au-dessus et au-dessous de cette colonne de pastilles fissiles, une couverture axiale supérieure et une couverture axiale inférieure de pastilles fertiles. Les aiguilles fertiles ne comportent que des pastilles fertiles. La fabrication de ces deux types d'aiguilles est différente étant donné que les aiguilles fertiles ne comportent pas de plutonium. Ce métal étant très toxique, il est nécessaire de le manipuler dans des boîtes à gants dans une enceinte à atmosphère contrôlée (gaz neutre). Une telle enceinte sera appelée dans la suite du texte, zone contrôlée. Au contraire, les pastilles fertiles à oxyde d'uranium non enrichi peuvent être manipulées sous hotte ventilée et sous air. Il y a donc avantage à séparer les opérations qui doivent être effectuées des opérations qui peuvent être effectuées en dehors de cette zone.

Selon le procédé de l'invention, on réalise les opérations successives suivantes pour fabriquer une aiguille combustible à pastilles fissiles et fertiles :

On effectue un sertissage de la gaine à une cote C située à proximité de l'extrémité supérieure de la colonne de pastilles fertiles 6 formant la couverture axiale inférieure de l'aiguille afin de maintenir cette colonne en position fixe (voir figure 1). Ce sertissage a pour but de positionner les pastilles fertiles 6. On introduit les pastilles fertiles 6 par l'extrémité inférieure de la gaine 2. On introduit une entretoise 12 inférieure au contact de la colonne fertile et on sertit la gaine avec l'entretoise à la cote fixe A. La longueur de l'entretoise 12 est suffisante pour qu'il soit toujours possible de la sertir avec la gaine à cette cote fixe A par rapport à la gaine, compte tenu des variations de longueur de la colonne fertile provenant des tolérances de fabrication des pastilles. Le sertissage de l'entretoise 12 immobilise la colonne fertile au jeu de montage près. On peut donc introduire le bouchon inférieur 8 et le souder sans difficultés particulières, puisqu'aucun effort n'est exercé sur ce bouchon. On contrôle ensuite le cordon de soudure.

L'ensemble des opérations qui viennent d'être décrites ne comporte pas de manipulation de plutonium et peut donc être effectué à l'extérieur d'une zone contrôlée. Grâce au sertissage réalisé à la cote C, l'ensemble peut être aisément manipulé et transporté en zone contrôlée où la fabrication de l'aiguille combustible se poursuit en boîte à gants.

En zone contrôlée, on introduit par la partie supérieure de la gaine 2 les pastilles fissiles 4. On introduit au-dessus de la colonne fissile des pastilles fertiles supérieures 6 puis l'entretoise supérieure 12 au contact de la colonne fertile. On sertit la gaine et l'entretoise à la cote fixe B. De même qu'on l'a déjà mentionné à propos de l'entretoise 12 inférieure, la hauteur de l'entretoise 12 supérieure permet de prendre en compte les tolérances sur la hauteur totale de l'empilement des pastilles.

On introduit le bouchon supérieur 8. On le soude et on contrôle la réalisation de la soudure.

Le procédé de l'invention s'applique également à la fabrication d'aiguilles fertiles. Dans ce cas, l'aiguille ne comporte qu'un seul type de pastilles et il n'est plus nécessaire de sertir la gaine à la cote fixe C. De plus, l'ensemble des opérations peut être réalisé hors d'une zone contrôlée. La réalisation est donc facilitée. La première partie de la fabrication peut être effectuée hors enceinte et sous air. Le montage peut commencer indifféremment par le bas ou le haut de l'aiguille. Ces opérations sont les suivantes :

On introduit une entretoise 12, on sertit cette entretoise et la gaine à une cote première fixe A ou B. On introduit le bouchon supérieur ou inférieur selon le côté où l'on a introduit et serti l'entretoise. On soude le bouchon et on contrôle la soudure de ce bouchon. On introduit les pastilles fertiles, puis une deuxième entretoise au contact de la colonne de combustible fertile, et on sertit cette entretoise à une deuxième cote fixe B ou A.

La fin de la fabrication s'effectue en raccordant l'extrémité ouverte de l'aiguille à une installation sous vide fin d'évacuer l'air résiduel contenu dans l'aiguille. On établit ensuite une atmosphère contrôlée à l'intérieur de l'enceinte, par exemple en hélium.

On pose le deuxième bouchon 8, on le soude et on contrôle la soudure de ce deuxième bouchon.

**Revendications**

1. Aiguille combustible ou aiguille fertile de réacteur nucléaire comportant une gaine (2), une colonne de pastilles fissiles et/ou fertiles (4, 6) située à l'intérieur de la gaine (2) et maintenue par deux entretoises tubulaires (12) placées en butée contre les deux extrémités de la colonne combustible (4, 6), et deux bouchons d'extrémité (8) soudés à chacune des deux extrémités de la gaine (2), caracérisée en ce que les deux entretoises (12) présentent des parois de faible épaisseur déformables et en ce que ces entretoises sont liées à la gaine (2) par une opération de sertissage réalisée simultanément sur la gaine (2) et sur chaque entretoise (12) à une cote fixe (A, B) de la gaine (2), la longueur de chaque entretoise (12) étant suffisante pour qu'il soit toujours possible de la sertir avec la gaine (2) à cette cote fixe (A, B) par rapport à la gaine (2), compte tenu des variations de longueur de la colonne fissile et/ou fertile provenant des tolérances de fabrication des pastilles (6).

2. Aiguille combustible selon la revendication 1, caractérisée en ce que la colonne inférieure (6) de pastilles fertiles est maintenue en outre par un sertissage de la gaine (2) effectué à une cote fixe (C) à un niveau situé à proximité de l'extrémité supérieure de cette colonne.

3. Aiguille combustible selon l'une des revendications 1 ou 2, caractérisée en ce que les entretoises (12) présentent à au moins une extrémité des échancrures (16) longitudinales pratiquées dans la paroi de l'entretoise et destinées à permettre la déformation des extrémités de ces entretoises sous l'effet de la colonne de pastilles dans le cœur du réacteur nucléaire.

4. Procédé de fabrication d'une aiguille combustible de réacteur nucléaire, ladite aiguille comportant une gaine (2), une colonne de pastilles fissiles et fertiles (4, 6) située à l'intérieur de la gaine (2) et maintenue par deux entretoises tubulaires (12) placées en butée contre les deux extrémités de la colonne combustible (4, 6) et deux bouchons d'extrémité (8) soudés aux deux extrémités de la gaine, caractérisé en ce que :

— on effectue un sertissage léger de la gaine à la cote fixe (C) ;

— on introduit des pastilles fertiles (6) par l'extrémité inférieure de la gaine (2) ;

— on introduit une entretoise inférieure (12) présentant des parois de faible épaisseur, déformables, et une longueur suffisante pour qu'il soit toujours possible de la sertir avec la gaine à une cote fixe (A) par rapport à la gaine compte tenu des variations de longueur de la colonne fertile provenant des tolérances de fabrication des pastilles, au contact de la colonne fertile (6) ;

— on sertit la gaine (2) avec l'entretoise (12) à la cote fixe (A) en une seule opération réalisée simultanément sur la gaine et sur l'entretoise ;

— on introduit le bouchon inférieur (8) ;

— on soude le bouchon inférieur (8) ;

— on contrôle la soudure ;

l'ensemble des opérations qui précèdent étant effectué hors zone contrôlée, et en ce que ;

— on introduit la colonne fissile (2) ;

— on introduit les pastilles fertiles supérieures (6) ;

— on introduit l'entretoise supérieure (12) au contact de la colonne fertile (6) ;

— on sertit la gaine (2) avec l'entretoise (12) à la cote fixe (B) ;

— on pose le bouchon supérieur (8) ;

— on soude le bouchon supérieur (8) ;

— on contrôle la soudure ;

l'ensemble des opérations de cette deuxième phase étant effectué en zone contrôlée.

5. Procédé de réalisation d'une aiguille fertile de réacteur nucléaire, ladite aiguille comportant une gaine (2), une colonne de pastilles fertiles (6) située à l'intérieur de la gaine (2) et maintenue par deux entretoises tubulaires (12) placées en butée contre les deux extrémités de la colonne fertile (6), et deux bouchons d'extrémité (8) soudés aux deux extrémités de la gaine, caractérisé en ce que :

— on introduit une entretoise (12) présentant des parois de faible épaisseur déformables et une longueur suffisante pour qu'il soit toujours possible de la sertir avec la gaine à une cote fixe (A) ou (B) par rapport à la gaine, compte tenu des variations de longueur de la colonne fertile provenant des tolérances de fabrication des pastilles ;

— on sertit cette entretoise avec la gaine (2) à la cote fixe (A) ou (B), en une seule opération réalisée simultanément sur la gaine et sur l'entretoise ;

— on introduit le premier bouchon (8) du côté de l'entretoise sertie ;

— on soude le premier bouchon (8) et on contrôle la soudure de ce bouchon ;

— on introduit les pastilles fertiles (6) ;

— on introduit la deuxième entretoise (12) ;

— on sertit cette entretoise à une cote fixe (B ou A) avec la gaine en une seule opération réalisée simultanément sur la gaine et sur l'entretoise (12) ;

l'ensemble des opérations qui précèdent étant effectué sous hotte ventilée et sous air frais, et en ce que :

— on pose le deuxième bouchon ;

— on soude le deuxième bouchon ;

— on contrôle la soudure de ce deuxième bouchon ;

l'ensemble de ces opérations étant effectué en enceinte à atmosphère contrôlée.

## Claims

1. A fuel element or fertile element for a nuclear reactor comprising a sheath (2), a column of fissile and/or fertile pellets (4, 6) located in the interior of the sheath (2) and held in place by two tubular spacers (12) abutting against the two ends of the fuel column (4, 6), and two end caps (8) welded at the two ends of the sheath (2), characterized in that the two spacers (12) have deformable walls of low thickness and in that the spacers are fixed to the sheath (2) by a crimping operation carried out simultaneously on the sheath (2) and on each spacer (12) at a fixed location (A, B) of the sheath (2), the length of each spacer (12) being sufficient for it to be always possible to be crimped with the sheath (2) at said fixed location (A, B) with respect to the sheath (2), irrespective of variations in length of the fissile and/or fertile column resulting from the manufacturing tolerances of the pellets (6).

2. Fuel element according to claim 1, characterized in that the lower column (6) of fertile pellets is additionally held in place by crimping of the sheath (2) carried out at a fixed location (C) at a level located near the upper end of said column.

3. Fuel element according to either of claims 1 or 2, characterized in that the spacers (12) have longitudinal notches (16) formed in at least one end of the wall of the spacer, and provided to permit deformation of the ends of the spacers under the effect of the column of pellets in the core of a nuclear reactor.

4. Process for the manufacture of a fuel element for a nuclear reactor, said element comprising a sheath (2), a column of fissile and fertile pellets (4, 6) located in the interior of the sheath (2) and held in place by two tubular spacers (12) abutting against the two ends of the fuel column (4, 6) and two end caps (8) welded at the two ends of the sheath, characterized in that :

— a slight crimping of the sheath is carried out at the fixed location (C) ;

— the fertile pellets (6) are introduced at the lower end of the sheath (2) ;

— a lower spacer (12), having deformable walls of small thickness and a length sufficient for it always to be possible to be crimped with the sheath at a fixed location (A) with respect to the sheath, irrespective of variations in length of the fertile column resulting from manufacturing tolerances of the pellets, is introduced in contact with the fertile column (6) ;

— the sheath (2) is crimped to the spacer (12) at the fixed location (A) in a single operation carried out simultaneously on the sheath and the spacer ;

— the lower end cap (8) is introduced ;

— the lower end cap (8) is welded ; and

— the weld is checked ;

all the preceding operations being conducted outside a controlled zone, and in that :

— the fissile column (2) is introduced ;

— the upper fertile pellets (6) are introduced ;

— the upper spacer (12) is introduced in contact with the fertile column (6) ;

— the sheath (2) is crimped to the spacer (12) at the fixed location (B) ;

— the upper end cap (8) is positioned ;

— the upper end cap (8) is welded ; and

— the weld is checked ;

all the operations of said second phase being conducted in a controlled zone.

5. Process for the production of a fertile element for a nuclear reactor, said element comprising a sheath (2), a column of fertile pellets (6) located in the interior of the sheath (2) and held in place by two tubular spacers (12) abutting against the two ends of the fertile column (6), and two end caps (8) welded to the two ends of the sheath, characterized in that :

— a spacer (12) having deformable walls of small thickness and a length sufficient for it always to be possible to be crimped with the sheath at a fixed location (A) or (B) with respect to the sheath, irrespective of variations in length of the fertile column resulting from manufacturing tolerances of the pellets, is introduced ;

— said spacer is crimped to the sheath (2) at the fixed location (A) or (B) in a single operation conducted simultaneously on the sheath and the spacer ;

— the first end cap (8) is positioned adjacent the crimped spacer ;

— the first end cap (8) is welded, and the welding of said end cap is checked ;

— the fertile pellets (6) are introduced ;

— the second spacer (12) is introduced ; and

— said spacer is crimped with the sheath at a fixed location (B or A), in a single operation conducted simultaneously on the sheath and on the spacer (12) ;

all the preceding operations being conducted under a ventilated hood and in fresh air, and in that :

— the second end cap is positioned ;

— the second end cap is welded ; and

— the welding of said second end cap is checked ;

all these operations being conducted in an enclosed vessel under a controlled atmosphere.

**Patentansprüche**

1. Kernreaktorbrennelement oder bebrütbares Kernreaktorelement mit einem Rohr (2), einer Säule von spaltbaren und/oder bebrütbaren Tabletten (4, 6), die sich im Inneren des Rohres (2) befinden und durch zwei rohrförmige Zwischenstücke (12) gehalten sind, die in Anlage an die zwei Enden der Brennelementsäule (4, 6) angeordnet sind, und zwei Endstopfen (8), die an den beiden Enden des Rohres (42) angeschweißt sind, dadurch gekennzeichnet, daß die zwei Zwischenstücke (12) verformbare Wände geringer Dicke aufweisen und daß diese Zwischenstücke mit dem Rohr (2) durch einen Einschnürungsvorgang verbunden sind, der gleichzeitig an dem Rohr (2) und jedem Zwischenstück (12) bei einem festen Maß (A, B) des Rohres (2) vorgenommen worden ist, wobei die Länge von jedem Zwischenstück (12) ausreichend ist, so daß es stets möglich ist, dieses mit dem Rohr (2) bei diesem festen Maß (A, B) in Bezug auf das Rohr (2) unter Einschluß von Längenänderungen der spaltbaren und/oder bebrütbaren Säule einzuschnüren, die von Herstellungstoleranzen der Tabletten (6) herrühren.

2. Brennelement nach Anspruch 1, dadurch gekennzeichnet, daß die untere Säule (6) der bebrütbaren Tabletten ferner durch eine Einschnürung des Rohres (2) gehalten ist, die bei einem festen Maß (C) auf einer in der Nähe des oberen Endes dieser Säule gelegenen Höhe durchgeführt ist.

3. Brennelement nach Anspruch 1 oder 2, dadurch gekennzeichnet, daß die Zwischenstücke (12) wenigstens ein Ende mit bogenförmigen, länglichen Ausschnitten (16) aufweisen, die in der Wand des Zwischenstückes ausgebildet und dazu bestimmt sind, eine Verformung der Enden dieser Zwischenstücke unter der Wirkung der Tablettensäule in dem Kernreaktorkern zu ermöglichen.

4. Verfahren zur Herstellung eines Brennelementes für einen Kernreaktor, wobei das Element ein Rohr (2), eine Säule aus spaltbaren und bebrütbaren Tabletten (4, 6), die sich im Inneren des Rohres (2) befinden und von zwei rohrförmigen Zwischenstücken (12) gehalten sind, die in Anlage gegen die zwei Enden der Brennelementsäule (4, 6) angeordnet sind, und zwei Endstopfen (8) aufweist, die an den zwei Enden des Rohres angeschweißt sind, dadurch gekennzeichnet, daß :

— man eine leichte Einschnürung des Rohres bei dem festen Maß (C) durchführt,

— man die bebrütbaren Tabletten (6) durch das untere Ende des Rohres (2) einführt,

— ein unteres Zwischenstück (12) einführt, welches Wände geringer Dicke aufweist, die verformbar sind und eine ausreichende Länge haben, damit es stets möglich ist, das Zwischenstück mit dem Rohr bei einem festen Maß (A) in Bezug auf das Rohr unter Einschluß von Längenänderungen der bebrütbaren Säule einzuschnüren, die von Herstellungstoleranzen der Tabletten herrühren, die mit der bebrütbaren Säule (6) in Berührung sind,

— man das Rohr (2) mit dem Zwischenstück (12) bei dem festen Maß (A) mit einem einzigen Vorgang einschnürt, der gleichzeitig an dem Rohr und dem Zwischenstück vorgenommen wird,

— man den unteren Stopfen (8) einführt,

— man den unteren Stopfen (8) anschweißt,

— man die Schweißung überprüft,

wobei die gesamten, vorhergehenden Vorgänge außerhalb eines überwachten Bereiches durchgeführt werden, und daß,

— man die spaltbare Säule (2) einführt,

— man die oberen bebrütbaren Tabletten (6) einführt,

— man das obere Zwischenstück (12) zur Berührung mit der bebrütbaren Säule (6) einführt,

— man das Rohr (2) mit dem Zwischenstück (12) bei dem festen Maß (B) einschnürt,

— man den oberen Stopfen (8) anordnet,

— man den oberen Stopfen (8) festschweißt,

— man die Schweißung überprüft,

wobei alle Vorgänge dieser zweiten Phase in einem überwachten Bereich durchgeführt werden.

5. Verfahren zur Herstellung eines bebrütbaren Brennelementes für einen Kernreaktor, wobei das Element ein Rohr (2), eine Säule aus bebrütbaren Tabletten (6), die sich innerhalb des Rohres (2) befinden und durch zwei rohrförmige Zwischenstücke (12) gehalten sind, die in Anlage gegen zwei Enden der bebrütbaren Säule (6) angeordnet sind, und zwei Endstopfen (8) umfaßt, die an den beiden Enden des Rohres angeschweißt sind, dadurch gekennzeichnet, daß

— man ein Zwischenstück (12) einführt, welches Wände geringer Dicke aufweist, die verformbar sind und eine ausreichende Länge haben, damit es stets möglich ist, das Zwischenstück mit dem Rohr bei einem festen Maß (A) oder (B) in Bezug auf das Rohr unter Einschluß von Längenänderungen der bebrütbaren Säule einzuschnüren, die von Herstellungstoleranzen der Tabletten herrühren,

— man dieses Zwischenstück mit dem Rohr (2) bei dem festen Maß (A) oder (B) durch einen einzigen Vorgang einschnürt, der gleichzeitig an dem Rohr und an dem Zwischenstück ausgeführt wird,

— man den ersten Stopfen (8) auf der Seite des eingeschnürten Zwischenstückes einführt,

— man den ersten Stopfen (8) festschweißt und die Schweißung dieses Stopfens überprüft,

— man die bebrütbaren Tabletten (6) einführt,

— man das zweite Zwischenstück (12) einführt,

— man dieses Zwischenstück bei einem festen Maß (B oder A) mit dem Rohr durch einen einzigen Vorgang einschnürt, der gleichzeitig an dem Rohr und dem Zwischenstück (12) durchgeführt wird,

wobei alle diese vorstehenden Vorgänge unter einem belüfteten Abzug und frei frischer Luft durchgeführt werden, und daß

— man den zweiten Stopfen anordnet,

— man den zweiten Stopfen anschweißt,

— man die Schweißung dieses zweiten Stopfens überprüft,

wobei alle diese Vorgänge in einem Raum mit überwachter Atmosphäre durchgeführt werden.

FIG. 1

FIG. 2

FIG.3

FIG.4